# EUROPÄISCHE PATENTSCHRIFT

(11) **EP 1 196 352 B1**
(45) Veröffentlichungstag und Bekanntmachung des Hinweises auf die Patenterteilung: **19.03.2003**
(21) Anmeldenummer: 00936664.2
(22) Anmeldetag: 28.04.2000
(51) Int. Cl.: C02F 1/46, B01D 61/42

(54) **VERFAHREN UND VORRICHTUNG ZUR ABWASSERREINIGUNG UNTER VERWENDUNG MODIFIZIERTER MEMBRANFILTRATION**
METHOD AND DEVICE FOR THE PURIFICATION OF WASTE WATER BY MODIFIED MEMBRANE FILTRATION
PROCEDE ET DISPOSITIF D'EPURATION DES EAUX USEES PAR FILTRATION MODIFIEE REALISEE AVEC UNE MEMBRANE

(30) Priorität: 03.05.1999 DE 19920240; 31.07.1999 DE 19936194
(43) Veröffentlichungstag der Anmeldung: 17.04.2002
(73) Patentinhaber: Heppe GmbH Biologische Systeme und Materialien, 06188 Queis (DE)
(72) Erfinder: HEPPE, Birgit, D-04347 Leipzig (DE)
(74) Vertreter: Voigt, Wolf-Rüdiger
(86) Internationale Anmeldenummer: DE0001389
(87) Internationale Veröffentlichungsnummer: WO00066499

(56) Entgegenhaltungen:
- EP-A- 0 046 155
- EP-A- 0 577 026
- WO-A-92/21433
- US-A- 4 312 729
- BRORS A ET AL: "QUERSTROMELEKTROFILTRATION VON MIKROORGANISMEN" CHEMIE. INGENIEUR. TECHNIK,DE,VERLAG CHEMIE GMBH. WEINHEIM, Bd. 64, Nr. 6, 1. Juni 1992 (1992-06-01), Seiten 536-538, XP000278666 ISSN: 0009-286X

## Beschreibung

Die Erfindung betrifft ein Reinigungsverfahren für Abwasser, in dem die Methoden der Membranfiltration und der Elektrolyse kombiniert werden und damit hohe Reinigungseffekte bei weitestgehend rückspüllosem Betrieb möglich sind.

Bekannt sind Anlagen nach dem Belebungsverfahren, die im Durchlauf oder im Aufstauprinzip arbeiten. Nachteil der Lösungen ist jedoch ein großer Flächen-, Raum- oder/und Zeitbedarf für die Sedimentationsprozesse. Die Phosphorelimination wird weitestgehend über den Belebtschlammaustrag erreicht. Anlagen nach dem Aufstauprinzip mit mehr als 7 kg TS/m³ mit weitgehender Belebtschlammmineralisierung haben noch eine relativ hohe P- Belastung zwischen 5 - 15 mg/l. Ablaufwerte von Großkläranlagen mit P-Elimination von < 2 mg/l werden ohne Flockung/ Fällung nicht erreicht.

Mikrofiltrationsanlagen als Platten- oder Röhrenfilter erreichen eine sehr gute BSB / CSB - Elimination, es liegen aber ebenfalls hohe NO₃⁻- und PO₄⁻-Gehalte im Ablauf vor. Durch die direkte Beaufschlagung der Membranen mit einem Belebtschlamm-/Wassergemisch setzen die Membranen schnell zu verkalken oder versalzen, so daß nur über eine hohe Rückspülleistung die Membranen gesäubert werden können, was sehr energieaufwendig ist und die Leistung der Anlage einschränkt.

Elektrolysezellen zur Abwasserreinigung haben den Vorteil hoher CSB-Abbauraten sowie einer guten Stickstoff- und Phosphatelimination, wenn Opferanoden verwendet werden, die Salze bilden. Nachteil ist jedoch der hohe Schlammanfall, der durch den hohen Anteil an Eisen (Anodenmaterial) zwar gut ausflockt, aber auch eine gesonderte Ausbildung des Behälterbodens erfordert, da dieser Schlamm fast nicht auf dem Behälterboden abgleitet. Bestimmte Mikroorganismen gelangen weiterhin in den Ablauf und die Keimzahlen sind wesentlich höher als bei der Mikrofiltration.

Es ist daher die Aufgabe der Erfindung, ein Abwasser so zu reinigen, daß hohe Reinigungsleistungen bei der biologischen Fracht und bei den Mineralstoffverbindungen sowie niedrige Keimzahlen verbleibender Mikroorganismen erreicht werden und das Abwasser nach der Reinigung in hoher Qualität zur Verfügung steht. In dieser Qualitätsstufe soll es problemlos als Brauchwasser im Haushalt nutzbar sein. Die Behandlungskosten sollen dabei nicht wesentlich höher als in größeren kommunalen Anlagen sein. Die Anlagen sollen kompakt sein und sowohl als Hausaufstellung als auch im Freigelände sowie als Nachrüstsatz bestehender Kläranlagen Verwendung finden.

Erfindungsgemäß wird die Aufgabe dadurch gelöst, daß ein Verfahren und eine Vorrichtung zu seiner Durchführung vorgeschlagen wird, unter Einschluß völlig neuer Merkmale, wobei ein hoher biologischer Abbau und eine gute CSB-, N- sowie P-Elimination bei geringen Keimzahlen und niedrigen Betriebskosten erreicht wird.

Das Belebtschlammverfahren wird größtenteils bei der weitergehenden Abwasserreinigung als Nitrifikation / Denitrifikation betrieben. In der Denitrifikationsphase sinkt der Belebtschlamm ab. Er wird durch Rührwerke oder geringe Belüftung in der Schwebe gehalten, um aktive Belebtschlammoberflächen zu erhalten. Das Absetzverhalten in der Denitrifikationsphase ist sehr gut (Absetzgeschwindigkeiten von 1 m/30 min die Regel, analog SBR-Verfahren).
Die Denitrifikationsphase wird dafür genutzt, die Umwälzung kurzzeitig ca. 15 - 20 min auszuschalten und die entstehende Klarphase abzuziehen. Das kann alternativ beispielsweise auch über einen Schrägklärer erfolgen. Man ist bestrebt, daß ein hoher Belebtschlammanteil im Belebtbecken/Denibecken verbleibt. Dann können Frachtschwankungen auf Grund des hohen TS-Gehaltes > 5 kg/kgd sicher abgefangen werden. Dabei wird die biologische Reinigung nicht bis zu ihrer maximalen Leistung geführt, sondern dann abgebrochen, wenn der Sauerstoffumsatz/Zehrung sinkt. Damit kann energieoptimal gearbeitet werden.
Die Klarphase mit geringem Belebtschlammanteil gelangt in die erfindungsgemäße Vorrichtung, die aus einer Kombination Elektrolysezelle und Membranfiltration besteht. Dabei wird für die Ausbildung der Membran oder als Stützwerkstoff für die Membran ein elektrisch leitendes Material verwendet, welches als Kathode angeschlossen wird. Besonders gut eignen sich dafür Edelmetalle, Metallgitter, Metallgazen oder beschichtete Membranen auf Basis von Kohlefasern, Edelstahl- und Kohlefaserstrukturen mit und ohne Beschichtung oder andere, Elektronen aussendende Materialien sind ebenfalls geeignet.
Als Anode werden Opferwerkstoffe, wie Eisenwerkstoffe, Aluminium usw. angewendet oder eine Kombination von diesen.
Auch Graphitelektroden sind möglich. Durch eine geeignete Anordnung der Kathode und Anoden bildet sich ein Spalt heraus, durch den das Abwasser fließt und die ionisierten Abwasserbestandteile (SO₄--, NO₃⁻, NO₂⁻, Cl⁻, PO₄⁻⁻, Bakterien und Viren usw) an die Anode gelangen und den Elektronenaustausch vornehmen, als Gas ausgasen oder als Schlamm ohne Bindungskräfte von der Anode absinken.
Das Herauslösen von Fe⁺⁺⁺ aus der Anode beschleunigt das Absetzverhalten. Es ist aber auch möglich, als Anode Graphit oder Edelstahl zu verwenden, wenn kein höherer anodischer Effekt gewünscht ist.

Die Erfindung soll nachfolgend in einem zweckmäßigen Ausführungsbeispiel näher erläutert werden.
Dabei zeigen:

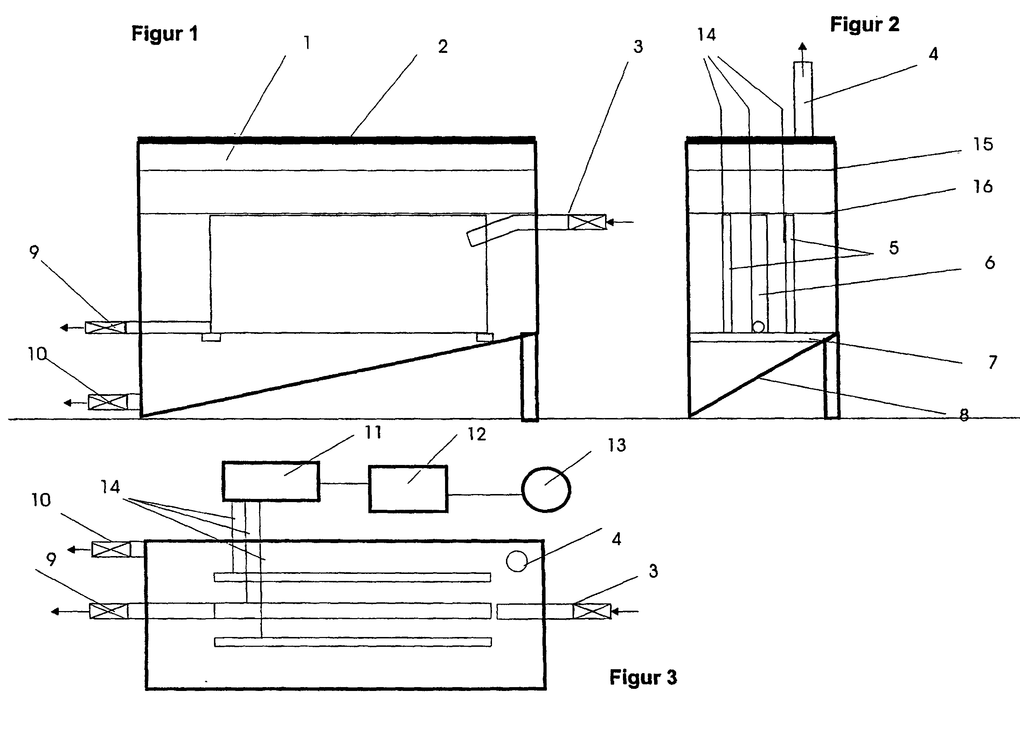

- Figur 1 -: Die Vorrichtung in der Vorderansicht zur weiteren Reinigung des Abwassers nach der biologischen Behandlung.
- Figur 2 -: Vorrichtung gemäß Figur 1 in der Seitenansicht.
- Figur 3 -: Vorrichtung gemäß Figur 1 in der Draufsicht.

Über einen absperrbaren Zulauf 3, der gesteuert werden kann, läuft Abwasser aus einer vorgelagerten Klärstufe in den Behälter 1. Der Einlauf ist so angeordnet, daß im Zulauf eine hohe Durchströmungsgeschwindigkeit an den Anoden 5 und der Kathode oder Membran 6 entsteht. Der Behälter 1 ist mit einem gasdichten Deckel 2 versehen. Eine Entgasungsleitung 4 ist vorgesehen. Die Anoden 5 und die kathodische Membran 6 sind auf einem Abstandshalterrahmen 7 angeordnet. Der geneigte Boden 8 ist zweidimensional geneigt, sodaß sich am tiefsten Punkt der Schlammabzug 10 befindet.

Der für die Elektrolyse erforderliche Gleichstrom wird unter Verwendung von Netzanschluß 13, Stelltrafo 12 und Gleichrichter 11 bereitgestellt. Der Abstandshalterrahmen 7 ist so gestaltet, daß die Spaltbreite zwischen Anode 5 und kathodischer Membran 6 verändert werden kann, sodaß er dem elektrolytischen Verhalten des Abwassers angepaßt werden kann, ebenso wie Stromstärke, Spannung und Zeitdauer. Die Regelung kann über ein bekanntes Steuergerät erfolgen.

Die Verfahrensführung dabei ist abhängig von der Wasserqualität und Wasserhärte. Die an den Elektroden anliegende Spannung ist so auszuwählen, daß es an bzw. in der Kathode zu einem leichten OH⁻-Ionenüberdruck kommt, der ein negatives Feld vor der Membran aufbaut, Metallionen möglichst vor der Membran zu Hydroxiden verwandelt und möglichst keine Metallionen in die Membranzelle eindringen. Es besteht dabei ein Zusammenhang zwischen Spannung/Stromfluß, Porenweite und Durchflußgeschwindigkeit bzw. Unterdruck in der Membran.

Für kommunales Abwasser beispielsweise ist eine Spannung von 2-4 Volt, eine Porenweite von 1-2 um und einem Überdruck von 20 cm Wassersäule ausreichend, um Ablaufwerte von <100 mg/l CSB, < 5 mg/l NH₄-N, <2 mg/l P und Keimzahlen < 10 zu erreichen.
Durch Vergrößerung der Porenweite auf 1 - 2 µm im Durchmesser erhöht sich die Durchgangsfläche von 0,03 - 0,2 µm² bei bekannter Mikrofiltration auf 0,78 - 1,5 µm².

Die Folgen sind geringere Unterdrücke an der Membran. 20 cm Wassersäule für freien Auslauf ist ausreichend, sowie geringere Gegenspüldrücke von 0,1-0,2 bar. Sehr hohe Durchsatzleistungen von 100 bis 200 l/m² können erreicht werden.

Die zur Durchführung des Verfahrens konfigurierte Vorrichtung weist die nachfolgend dargestellten Elemente auf, die durch ihre Funktionalität miteinander verknüpft sind:

Die Stromzuführung für die Elektrolyse erfolgt über die Elektrodenanschlüsse 14 zu den Anoden 5 und kathodischer Membran 6 bei sauberer Membran, d. h. das zu reinigende Abwasser tritt ungehindert durch die Poren der kathodischen Membran 6. Das Klarwasser läuft drucklos oder mit erzeugtem geringen Unterdruck über den Klarwasserablauf 9 ab. Der Wasserspiegel befindet sich auf einem Niveau, wie er durch das Positionszeichen 16 [min] angezeigt wird. Bei einem Anstieg des zu reinigenden Abwassers beispielsweise auf das Niveau, wie das durch das Positionszeichen 15 [max] verdeutlicht wird (weil sich die Durchgangsfläche der kathodischen Membran 6 etwas verringert) erfolgt ein Rückspülen der kathodischen Membran 6 unter Verwendung einer nicht dargestellten Rückspülpumpe über den Ablauf 9 und Sperrung des Zulaufes 3. Dem Rückspülwasser kann verdünnte Säure zugeführt werden, damit ein Verblocken der kathodischen Membran 6 mit Hydroxiden vermieden wird. Zeitnah erfolgt eine gegenpolige Umschaltung der Stromzuführung und ein Absprengen der Partikel an den Anoden 5 und der kathodischen Membran 6, wobei der Abwasserspülstrom die Partikel verwirbelt. Die Stromzufuhr über die Elektrodenanschlüsse 14 wird abgeschaltet. Der Schlamm setzt sich auf dem geneigten Boden 8 ab und wird, wie bereits beschrieben, über den Schlammabzug 10 entnommen.
Die Flächendurchsatzleistung beträgt etwa 175 - 200 l/m²h im drucklosen Betrieb (freier Auslauf, 20 cm Wasserspiegeldifferenz).
Beispielsweise reicht somit für einen 8-Personenhaushalt mit 1200 l/d bei einer Nitrifikations-/Denitrifikationszeit von 16 h/ 8 h und unter Berücksichtigung der Stoßbelastung Q_{d10} x 120 l/h eine Fläche von 0,6 m² aus.
An die Kathode gelangen vorwiegend Wasserstoff- und Amoniumionen, die an der Kathode ausgasen.

Der besondere Vorteil der Verfahrens- und Vorrichtungskombination ist darin begründet, daß durch die anodische Wirkung der Restbelebtschlamm nicht an die Kathode = Membran gelangt und seinerseits die Kathode keine Salzbildner SO₄⁻, PO₄⁻ durch ihre abstoßende Wirkung aufnimmt. Insgesamt wird durch die sich in der Kathodenmembran 6 bildenden OH⁻-Ionen die gesamte Oberfläche der Membran negativ aufladen. Zur Kathode angezogene Metallionen werden in einer Dünnschicht vor der Membran bereits zu Metallhydroxid umgewandelt und ausgefällt und gelangen so nicht in das Membraninnere. Durch eine Regelung des Stromflusses wird vermieden, daß zuviel OH⁻-Ionen gebildet werden, bzw. zu wenige, da sonst Metallhydroxid in der Membran ausfällt.

Dieser Vorgang ist gut steuerbar, da nach bestimmter Verweilzeit die Leitfähigkeit abnimmt und damit der Stromfluß. Über Stromfluß und Abwasserfluß sind gut regelbare Bedingungen einzustellen.

Eine Redoxmessung im Raum Anode - Kathode bzw. im Ablaufwasser der Membran kann darüber einen exakten Nachweis erbringen. Weiterhin erhält die kathodische Membran 6 neue aktive Eigenschaften zur chemisch-physikalischen Behandlung des Abwassers bei gleichzeitigem Schutz der Membran vor Verstopfung bzw. Anlagerungen von Salzen und Bakterienkulturen.

Die Membran ist damit nicht nur ein mechanisches Schlammabscheideelement, sondern ein aktives Element zur physikalisch-chemischen Behandlung des Abwassers.
Der geringe Stromverbrauch von etwa 1 kWh pro m³ Abwasser ermöglicht hohe Energieeinsparungen, da der O₂ - Eintrag der Biologie gedrosselt werden kann. Um das Problem der Verkalkung der Membran zu lösen, kann dem Rückspülwasser eine verdünnte Säure zugegeben werden. Die angelagerten Hydroxide werden damit entfernt und gleichzeitig der pH-Wert reguliert, der sich bei zu hoher Spannung in den basischen Bereich verschiebt (Bildung OH⁻- Ionen). Bei zu hohem Kalkanteil im Abwasser kann eine bekannte Elektrolysezelle oder andere geeignete Hilfsmittel oder Vorrichtungen vorgeschaltet werden.

### Liste der verwendeten Bezugszeichen

- 1 -: Behälter
- 2 -: gasdichter Deckel
- 3 -: absperrbarer Zulauf
- 4 -: Entgasungsleitung
- 5 -: Anoden
- 6 -: kathodische Membran
- 7 -: Abstandshalterrahmen
- 8 -: geneigter Boden
- 9 -: Klarwasserablauf
- 10 -: Schlammabzug
- 11 -: Gleichrichter
- 12 -: Stelltransfomator
- 13 -: Netzanschluß
- 14 -: Elektrodenanschlüsse
- 15 -: Positionszeichen [max.]
- 16 -: Positionszeichen [min.]

## Patentansprüche

1. Verfahren zur Abwasserreinigung unter Verwendung modifizierter Membranfiltration, wobei das Abwasser der abgesetzten Phase einer biologischen Reinigungsanlage entnommen werden kann, **dadurch gekennzeichnet, daß** das Abwasser in einen Behälter (1) geleitet wird, eine elektrisch leitende Membran im Sinne einer kathodischen Membran (6) und Anoden (5) derart angeordnet sind, daß das Abwasser im Raum zwischen den Anoden (5) und der kathodischen Membran (6) durch die kathodische Membran (6) tritt, während negative ionisierte Teilchen als Abwasserinhaltsstoffe von der Membran (6) abgestoßen werden, diese negativen ionisierten Teilchen sich an den Anoden (5) anlagern und das gereinigte Abwasser nach der Membranfiltration über den Klarwasserablauf (9) den Behälter (1) verläßt.

2. Verfahren zur Abwasserreinigung nach Anspruch 1, **dadurch gekennzeichnet, daß** bei einer Reinigung der kathodischen Membran (6) und den Anoden (5) ein Umpolen über die Elektrodenanschlüsse (14) und damit ein Abstoßen angelagerter Teilchen erfolgt, gleichzeitig ein Rückspülen der Membran (6) vorgenommen wird und unter Verwendung des Rückspülwassers eine Verwirbelung der Abwasserpartikel zwischen kathodischer Membran (6) und Anoden (5) erfolgt.

3. Verfahren zur Abwasserreinigung nach Anspruch 2, **dadurch gekennzeichnet, daß** dem Rückspülwasser verdünnte Säure zugeführt werden kann.

4. Verfahren zur Abwasserreinigung nach Anspruch 1, **dadurch gekennzeichnet, daß** die Anoden (5) mit der Anlagerung der Abwasserpartikel insbesondere den biologischen Schlamm und die Salze binden.

5. Verfahren zur Abwasserreinigung nach Anspruch 1, **dadurch gekennzeichnet, daß** die sedimentiert und zurückgehaltenen Abwasserinhaltsstoffe über den Schlammabzug (10) aus dem Behälter (1) entnommen werden.

6. Verfahren zur Abwasserreinigung nach Anspruch 1, **dadurch gekennzeichnet, daß** das Abwasser nach dein Filtern den Behälter (1) über den Klarwasserablauf (9) drucklos oder mit geringem Unterdruck verläßt.

7. Verfahren zur Abwasserreinigung nach Anspruch 1, **dadurch gekennzeichnet, daß** die Zuführung des Stromes sowie Rückspüldauer und -intensität gesteuert werden.

8. Verfahren zur Abwasserreinigung nach Anspruch 1, **dadurch gekennzeichnet, daß** die entstehenden Gase, insbesondere Wasserstoff, geordnet aufgefangen werden und einer weiteren Nutzung zugeführt werden.

9. Vorrichtung zur Abwasserreinigung unter Verwendung einer modifizierten Membranfiltration nach Anspruch 1, mit einem Zulauf (3), einem Behälter (1) mit Anoden (5), einer elektrisch leitenden kathodischen Filtermembran (6) und Elektroanschlüssen (14), wobei die elektrisch leitende kathodische Filtermembran (6) in dem Raum zwischen den Anoden (5) angebracht ist und der Innenraum der kathodischen Filtermembran (6) mit einem Klarwasserauslauf(9) verbunden ist.

10. Vorrichtung zur Abwasserreinigung nach Anspruch 1und 9, **dadurch gekennzeichnet, daß** der Behälter (1) mit einem gasdichten Deckel (2) versehen ist.

11. Vorrichtung zur Abwasserreinigung nach Anspruch 1und 9, **dadurch gekennzeichnet, daß** die kathodische Filtermembran (6) röhren- oder plattenförmig ausgebildet ist und eine gesonderte Kathode im räumlichen Abstand zur kathodischen Filtermembran (6) innerhalb eines Membranraumes angebracht ist.

12. Vorrichtung zur Abwasserreinigung nach Anspruch 1und 9, **dadurch gekennzeichnet, daß** die kathodische Filtermembran (6) eine leitfähige Beschichtung aufweist, die auf einem Träger aufgebracht ist.

13. Vorrichtung zur Abwasserreinigung nach Anspruch 1und 9, **dadurch gekennzeichnet, daß** die selbst nicht leitenden kathodischen Filtermembranen mit leitfähigen Schichten eine räumliche Einheit bilden, wobei die leitfähigen Schichten vor oder nach oder vor und nach den kathodischen Filtermembranen angeordnet sind.

14. Vorrichtung zur Abwasserreinigung nach Anspruch 1 und 9, **dadurch gekennzeichnet, daß** in den Reaktionsräumen zwischen kathodischer Filtermembran (6) und Anode (5) oder/und im Ablauf Redox-, pH-Wert- oder Leitfähigkeitselektroden eingesetzt sind.

## Claims

1. Method for sewage purification by means of modified diaphragm filtration where the sewage water of the settled phase may be taken from a biologic purification plant, in which the sewage water is delivered to a tank (1) where an electrically conductive diaphragm in the sense of a cathodic diaphragm (6) and anodes (5) are arranged such that the sewage water enters the space between the anodes (5) and the cathodic diaphragm (6) through the cathodic diaphragm (6) while negatively ionised particles as pollution matter are repelled by the diaphragm (6) so that these negatively ionised particles collect on the anodes (5) whereas the cleaned sewage water passes the diaphragm filtration before it leaves the tank (1) through the clear water outlet (9).

2. Method for sewage purification according to claim 1 in which the cleaning of the cathodic diaphragm (6) and the anodes (5) goes along with polarity reversal through the electrode connections (14) such that particles collected there are repelled, and along with simultaneous backwashing of the diaphragm (6) such that the backwashing water causes turbulence of sewage water particles between the cathodic diaphragm (6) and the anodes (5).

3. Method for sewage purification according to claim 2 in which the backwashing water may be added diluted acid.

4. Method for sewage purification according to claim 1 in which the anodes (5) with precipitation of sewage particles cause agglutination mainly of biologic sludge and salts.

5. Method for sewage purification according to claim 1 in which the settled and detained pollution matter is removed from the tank (1) through the sludge extractor (10).

6. Method for sewage purification according to claim 1 in which the sewage water after filtration leaves the tank (1) through the clean-water outlet (9) without pressure or with a low negative pressure.

7. Method for sewage purification according to claim 1 in which the inflowing sewage water as well as the time and intensity of backwashing are controlled.

8. Method for sewage purification according to claim 1 in which the developing gases, especially hydrogen, are properly collected and provided for further use.

9. Appliance for sewage purification by employment of modified diaphragm filtration according to claim 1, provided with inflow (3), tank (1) with anodes (5), one electrically conductive cathodic filter diaphragm (6) and electrical connections (14), in which the electrically conductive filter diaphragm (6) is located in the space between the anodes (5), and in which the inner space of cathodic filter diaphragm (6) is connected with a clear-water outlet (9).

10. Appliance for sewage purification according to claims 1 and 9 in which the tank (1) is provided with a gas-tight cover (2).

11. Appliance for sewage purification according to claims 1 and 9 in which the cathodic filter diaphragm (6) is of tube or plate shape, and in which a separate cathode is located inside the diaphragm space in a spatial distance to the cathodic filter diaphragm (6).

12. Appliance for sewage purification according to claims 1 and 9 in which the cathodic filter diaphragm (6) has a conductive coating applied to a substrate.

13. Appliance for sewage purification according to claims 1 and 9 in which the non-conductive cathodic filter diaphragms with their conductive coatings form a spatial unit, and in which the conductive coatings are arranged in front or behind or in front and behind the cathodic filter diaphragms.

14. Appliance for sewage purification according to claims 1 and 9 in which redox, pH-value or conductivity electrodes are installed in the reaction spaces between the cathodic filter diaphragm (6) and the anode (5) and/or in the outlet.

## Revendications

1. Procédé pour l'épuration d'eau résiduaire en utilisant une filtration modifiée à diaphragme, l'eau résiduaire pouvant être soutirée de la phase de décantation d'une installation biologique de dépollution, **caractérisé par le fait que** l'eau résiduaire est dirigée vers un réservoir (1), qu'un diaphragme électriquement conducteur, dans le sens d'un diaphragme cathodique (6), et que des anodes (5) sont disposés de telle manière que l'eau résiduaire entre dans l'espace entre les anodes (5) et le diaphragme cathodique (6) passe par le diaphragme cathodique (6), alors que les particules ionisées négatives en tant que matières intrinsèques de l'eau résiduaire sont repoussées par le diaphragme (6), ces particules ionisées négatives se déposent sur les anodes (5) et l'eau résiduaire épurée par la filtration à diaphragme quitte le réservoir (1) par l'écoulement d'eau clarifiée (9).

2. Procédé pour l'épuration d'eau résiduaire selon la revendication 1, **caractérisé par le fait que** lors d'un nettoyage du diaphragme cathodique (6) et des anodes (5) une inversion de polarité par les raccords d'électrodes (14) a lieu et ainsi un rejet des particules déposées, en même temps un rinçage inverse du diaphragme (6) se produit et à l'aide de l'eau de rinçage à contre-courant on réalise un tourbillon entre le diaphragme cathodique (6) et les anodes (5) qui entraîne les particules d'eau résiduaire.

3. Procédé pour l'épuration d'eau résiduaire selon la revendication 2, **caractérisé par le fait que** l'on ajoute de l'acide dilué à l'eau de rinçage à contre-courant.

4. Procédé pour l'épuration d'eau résiduaire selon la revendication 1, **caractérisé par le fait que** les anodes (5) avec la fixation des particules d'eau résiduaire retiennent en particulier la boue biologique et les sels.

5. Procédé pour l'épuration d'eau résiduaire selon la revendication 1, **caractérisé par le fait que** les matières de l'eau résiduaire qui se sont déposées et ont été retenues sont retirées du réservoir (1) par le dispositif de décharge de la boue (10).

6. Procédé pour l'épuration d'eau résiduaire selon la revendication 1, **caractérisé par le fait que** l'eau résiduaire quitte le réservoir (1) sans pression ou avec une légère dépression après le filtrage par l'écoulement d'eau claire (9).

7. Procédé pour l'épuration d'eau résiduaire selon la revendication 1, **caractérisé par le fait que** l'apport de courant ainsi que la durée et l'intensité du rinçage à contre-courant se font sous contrôle.

8. Procédé pour l'épuration d'eau résiduaire selon la revendication 1, **caractérisé par le fait que** les gaz produits, en particulier l'hydrogène sont recueillis de manière ordonnée et reconduits pour une utilisation postérieure.

9. Dispositif d'épuration d'eau résiduaire sous application d'une filtration modifiée à diaphragme selon la revendication 1, avec une arrivée de liquide (3), un réservoir (1) avec anodes (5), un diaphragme filtrant électriquement conducteur (6) et des raccordements électriques (14), le diaphragme filtrant cathodique électriquement conducteur (6) se trouvant dans l'espace entre les anodes (5) et l'espace intérieur du diaphragme filtrant cathodique (6) qui est relié à un écoulement d'eau claire (9).

10. Dispositif d'épuration d'eau selon les revendications 1 et 9, **caractérisé par le fait que** le réservoir (1) est pourvu d'un couvercle (2) étanche aux gaz.

11. Dispositif d'épuration d'eau selon les revendications 1 et 9, **caractérisé par le fait que** le diaphragme filtrant cathodique (6) est configuré en forme de tube ou de plaque et qu'une cathode particulière est disposée à une distance spatiale du diaphragme filtrant cathodique (6) à l'intérieur d'un espace de diaphragme.

12. Dispositif d'épuration d'eau selon les revendications 1 et 9, **caractérisé par le fait que** le diaphragme filtrant cathodique (6) possède une couche conductrice mise sur un porteur.

13. Dispositif d'épuration d'eau selon les revendications 1 et 9, **caractérisé par le fait que** les diaphragmes filtrants cathodiques, eux-mêmes non conducteurs, forment une unité spatiale avec les couches conductrices, les couches conductrices étant disposées devant ou après ou encore avant et après les diaphragmes filtrants cathodiques.

14. Dispositif d'épuration d'eau selon les revendications 1 et 9, **caractérisé par le fait que** dans les espaces de réaction entre le diaphragme filtrant cathodique (6) et l'anode (5) et / ou l'écoulement sont utilisées des électrodes de redox, de valeur pH ou de conductibilité.
